# EUROPEAN PATENT SPECIFICATION

(11) **EP 2 148 567 B1**
(45) Date of publication and mention of the grant of the patent: **02.11.2011**
(21) Application number: 08758528.7
(22) Date of filing: 15.05.2008
(51) Int. Cl.: A01N 43/80

(54) **A METHOD OF PROTECTING A PLANT PROPAGATION MATERIAL, A PLANT, AND/OR PLANT ORGANS**
VERFAHREN ZUM SCHUTZ VON PFLANZENVERMEHRUNGSMATERIAL, EINE PFLANZE UND/ODER PFLANZENORGANE
PROCÉDÉ DE PROTECTION D'UNE MATIÈRE DE PROPAGATION VÉGÉTALE, D'UN VÉGÉTAL ET/OU D'ORGANES VÉGÉTAUX

(30) Priority: 31.05.2007 EP 07010768; 19.07.2007 EP 07014175
(43) Date of publication of application: 03.02.2010
(73) Proprietor: Syngenta Participations AG, 4058 Basel (CH)
(72) Inventor: RENOLD, Peter, CH-4332 Stein (CH); HUETER, Ottmar, Franz, CH-4332 Stein (CH); MAIENFISCH, Peter, CH-4332 Stein (CH); ZAMBACH, Werner, CH-4332 Stein (CH); PITTERNA, Thomas, CH-4332 Stein (CH); GRIMM, Christoph, CH-4332 Stein (CH)
(74) Representative: Hölscher, Ingo
(86) International application number: PCT/EP2008/003885
(87) International publication number: WO 2008/145261

(56) References cited:
- EP-A- 0 207 891
- DE-A1- 3 544 436

## Description

The present invention relates to a method for using a defined compound in the control or prevention of pest damage, in particular in a plant propagation material and plant organs that grow at a later point in time by applying the compound on to the plant propagation material or locus thereof, a plant propagation material composition thereof and a pesticidal combination of such a compound with one or more certain pesticides.

The treatment of plant propagation material is a targeted pesticide application which addresses the need for a reduction of environmental and worker exposure compared to foliar or soil pesticide applications.

Pesticidal active ingredients and combinations thereof for controlling pathogens and pests in plant propagation materials and plant organs that grow at a later point in time are described in the literature. The biological properties of those known compounds and combinations are not entirely satisfactory in the areas of pest control, phytotoxicity, and environmental and worker exposure, for example. In particular, in the instance a pest has become, or risks becoming resistant to the previously known combinations, improved methods of control or prevention are sought.

There is a continuing need to provide pesticidal compositions, which provide improved, for example, biological properties, especially for controlling pathogens and/or pests.

Sulfonyl compounds, in particular benzoisothiazol-S,S-dioxides are known. It has now been found that a certain compounds have unexpectedly good activity when applied onto a plant propagation material or locus thereof. In particular for the control of pests, such as animal pests, particularly those found in agriculture.

Accordingly, in a first aspect, the present invention provides a method of controlling or preventing pest damage in a plant propagation material, a plant, and/or plant organs that grow at a later point in time, which comprises applying on the plant propagation material or locus thereof a compound I or II represented by formula 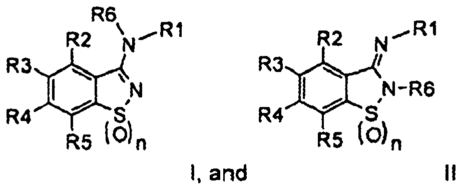 wherein
R1 is H and R6 is represented by (C₁-C₄)alkyl or (C₂-C₄)alkenyl, or R1 is H, (C₁-C₅)alkyl, C₁-C₄)haloalkyl, (C₁-C₄)hydroxyalkyl, (C₁-C₄)alkoxy, R7C(O), R8NHC(O) or R9R10N and R6 is represented by H or ;
R2 is represented by H, halogen, (C₁-C₅)alkyl, (C₁-C₅)haloalkyl, (C₁-C₅)alkoxy, (C₁-C₅)haloalkoxy, or phenoxy;
R3 to R5 is, independently of each other, represented by H, halogen, (C₁-C₅)alkyl, (C₁-C₅)alkoxy, (C₁-C₅)haloalkyl, or NO₂;
R7 is represented by optionally substituted alkyl (preferably (C₁-C₅)alkyl and (C₁-C₅)haloalkyl), (C₁-C₄)haloalkoxy(C₁-C₄)haloakyl or optionally substituted phenyl;
R8 is represented by optionally substituted phenyl, (C₁-C₄)alkyl, or (C₃-C₇)cycloalkyl;
R9 and R10 is, independently of each other, represented by H or (C₁-C₄)alkyl; and
n is either 0 or 2, preferably 2;
or an enantiomer, diastereomer, thereof.

In a second aspect, the present invention provides a method of protecting a plant propagation material, a plant, part of a plant and/or plant organs that grow at a later point in time against pest damage by applying to the plant propagation material or locus thereof a compound defined in the first aspect.

The invention also relates to a plant propagation material treated with the compound defined in the first aspect.

The present invention also relates to a method which comprises (i) treating a plant propagation material, such as a seed, with a compound as defined in the first aspect, and (ii) planting or sowing the treated propagation material, wherein the compound protects against pest damage of the treated plant propagation material, parts of plant, plant organs and/or plant grown from the treated propagation material.

Further, the present invention concerns a method which comprises (i) treating a plant propagation material, such as a seed, with a compound as defined in the first aspect, and (ii) planting or sowing the treated propagation material, and (iii) achieving protection against pest damage of the treated plant propagation material, parts of plant, plant organs and/or plant grown from the treated propagation material.

In an embodiment of any aspect of the invention, a stereoisomeric or diastereomeric mixture of compound I or II is applied on the plant propagation material or locus thereof. In a further embodiment, a mixture of compound I and II is applied on the plant propagation material or locus thereof.

In each embodiment of the present invention, the application of the compound defined in the first aspect is to a plant propagation material and also to the locus thereof.

According to the instant invention, a "stereoisomeric or diastereomeric mixture" of two stereoisomers or diastereomers or a "stereoisomeric or diastereomeric compound" means a mixture of any two stereoisomers or diastereomers in a ratio from 1:10 to 10:1, preferably 1:5 to 5:1.

Similarly, a mixture of compound I and II is preferably in a ratio from 1:10 to 10:1, preferably 1:5 to 5:1.

In a further aspect of the invention, the compound of formula I or II is present in the form of a plant propagation material, preferably seed, treatment composition, wherein the composition optionally further comprises one or more customary formulation auxiliaries.

The compounds of formula (I) or (II) may exist in different geometric or optical isomers or tautomeric forms. This invention covers all such isomers and tautomers and mixtures thereof in all proportions. In particular, in the case compounds of the formula I have one or more centers of chirality, they can be present as mixtures of enantiomers or diastereomers.

"Halogen" is fluorine, chlorine, bromine and iodine, in particular fluorine and chlorine, and "halo" the corresponding substituent.

A group substituted with a halo substituent can have 1 to the maximum number of substituents possible for that group.

Each of alkyl, haloakyl, alkoxy, haloalkoxy, alkenyl can be straight or branched. In the instance that the alkyl or phenyl group, independently of each other, on R7 and R8 is substituted, suitable substituents include halogen.

Preferably, independent of each other,
R1 is H and R6 is represented by (C₁-C₃)alkyl or (C₂-C₃)alkenyl, or R1 is H, (C₁-C₃)alkyl, (C₁-C₃)haloalkyl, (C₁-C₃)hydroxyalkyl, (C₁-C₄)alkoxy, R7C(O), R8NHC(O) or R9R10N and R6 is represented by H ;
R2 is represented by hydrogen, halogen, (C₁-C₃)alkyl, (C₁-C₃)haloalkyl, (C₁-C₃)alkoxy, (C₁-C₃)haloalkoxy, or phenoxy;
R3 to R5 is, independently of each other, represented by H, halogen, (C₁-C₃)alkyl, (C₁-C₃)alkoxy, (C₁-C₃)haloalkyl, or NO2;
R7 is represented by optionally substituted alkyl (preferably (C₁-C₃)alkyl), (C₁-C₃)halo alkoxy(C₁-C₃)haloakyl or optionally substituted phenyl;
R8 is represented by optionally substituted phenyl, (C₁-C₃)alkyl, or (C₃-C₅)cycloalkyl;
R9 and R10 is, independently of each other, represented by H or (C₁-C₃)alkyl; and
n is 2.

In an embodiment, R1 in formula I is represented by H or R7C(O).

In an embodiment, R6 in formula I is represented by H.

In an embodiment, R1 in formula II is represented by H.

In an embodiment, R6 in formula II is represented by (C₁-C₄)alkyl.

In an embodiment, R2, independent of formula I or II, is represented by H, (C₁-C₅)alkyl, (C₁-C₅)alkoxy, (C₁-C₅)haloalkoxy, or halogen. Preferably halogen is Cl or F; (C₁-C₅)alkyl is (C₁-C₃)alkyl, such as methyl; preferably (C₁-C₅)haloalkoxy is (C₁-C₃)haloalkoxy, such as OCHF₂; and preferably (C₁-C₅)alkoxy is (C₁-C₃)alkoxy, advantagesously OCH₃.

In an embodiment, R2 in formula I is represented by H, or (C₁-C₅)alkyl. Preferably (C₁-C₅)alkyl is (C₁-C₃)alkyl, such as methyl.

In an embodiment, R2 in formula I is represented by halogen. Preferably halogen is Cl or F.

In an embodiment, R3 to R5, independent of formula I or II, is represented by H.

In an embodiment, R7 is represented by (C₁ to C₃)alkyl, preferably methyl.

In an embodiment, a compound of formula I is represented by R1 is H or R7C(O) and R6 is represented by H;
R2 is represented by hydrogen, halogen, (C₁-C₃)alkyl, (C₁-C₃)alkoxy, or (C₁-C₃)haloalkoxy;
R3 to R5 is represented by H;
R7 is represented by (C₁-C₃)alkyl; and
n is 2.

In an embodiment, a compound of formula II is represented by R1 is H and R6 is represented by (C₁-C₃)alkyl;
R2 is represented by halogen, or (C₁-C₃)alkyl;
R3 to R5 is represented by H; and
n is 2.

Examples of preferred compounds I and II are illustrated in Table 1, 2 and 3:
Table 1 : A compound of formula (I)

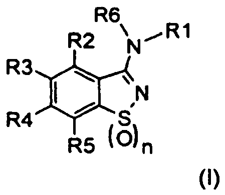

**wherein n = 2 and the values for R₁, R₂, R₃, R₄, R₅ and R₆ are as given in the Table:**

| **Line** | **R₁** | **R₆** | **R₂** | **R₃** | **R₄** | **R₅** |
|---|---|---|---|---|---|---|
| P1. 1 | H | H | OCH₃ | H | H | H |
| P1. 2 | H | H | OCHF₂ | H | H | H |
| P1. 3 | CH₃C(=O) | H | OCHF₂ | H | H | H |
| P1. 4 | CH₃CH₂C(=O) | H | OCHF₂ | H | H | H |
| P1. 5 | H | H | Cl | H | H | H |
| P1. 6 | H | H | F | H | H | H |
| P1. 7 | H | H | CH₃ | H | H | H |
| P1. 8 | CH₃C(=O) | H | OCH₃ | H | H | H |
| P1. 9 | H | H | OPh | H | H | H |
| P1. 10 | C₆H₁₁-NH-C(=O) | H | Cl | H | H | H |
| P1. 11 | Cl-CH₂-CH₂ | H | Cl | H | H | H |
| P1. 12 | CH₃-NH-C(=O) | H | Cl | H | H | H |
| P1. 13 | CH₃-CH₂-CH₂-CH₂ | H | Cl | H | H | H |
| P1. 14 | OH-CH₂-CH(Et) | H | Cl | H | H | H |
| P1. 15 | (CH₃)₂N- | H | Cl | H | H | H |
| P1. 21 | Cl-CH₂-C(=O) | H | H | H | H | H |
| P1. 22 | CH₃C(=O) | H | H | H | H | H |
| P1. 23 | CH₃CH₂C(=O) | H | H | H | H | H |
| P1. 24 | CH₃CH₂CH₂C(=O) | H | H | H | H | H |
| P1. 25 | n-C₅H₁₁-C(=O) | H | H | H | H | H |
| P1. 26 | (CH₃)₂CHC(=O) | H | H | H | H | H |
| P1. 27 | CF₃C(=O) | H | H | H | H | H |
| P1. 28 | CF₃CF₂C(=O) | H | H | H | H | H |
| P1. 29 | CF₃CF₂CF₂C(=O) | H | H | H | H | H |
| P1. 30 | CCl₃C(=O) | H | H | H | H | H |
| P1. 31 | PhC(=O) | H | H | H | H | H |
| P1. 32 | CH₃C(=O) | H | Cl | H | H | H |
| P1. 33 | CH₃CH₂C(=O) | H | Cl | H | H | H |
| P1. 34 | PhC(=O) | H | Cl | H | H | H |
| P1.35 | Cl-CH₂-C(=O) | H | Cl | H | H | H |
| P1. 36 | CH₃CH₂CH₂C(=O) | H | Cl | H | H | H |
| P1. 37 | (CH₃)₂CHC(=O) | H | Cl | H | H | H |
| P1. 38 | n-C₅H₁₁C(=O) | H | Cl | H | H | H |
| P1. 39 | CF₃C(=O) | H | Cl | H | H | H |
| P1. 40 | CF₃CF₂C(=O) | H | Cl | H | H | H |
| P1. 41 | CF₃CF₂CF₂C(=O) | H | Cl | H | H | H |
| P1. 42 | CCl₃C(=O) | H | Cl | H | H | H |
| P1. 43 | CH₃C(=O) | H | Cl | Br | H | H |
| P1. 44 | CH₃CH₂C(=O) | H | Cl | Br | H | H |
| P1.45 | CH₃C(=O) | H | H | CH₃ | H | H |
| P1. 46 | CH₃CH₂C(=O) | H | Cl | H | H | Cl |
| P1. 47 | CH₃C(=O) | H | Cl | H | H | Cl |
| P1. 48 | CH₃C(=O) | H | H | H | Cl | H |
| P1. 49 | CH₃C(=O) | H | H | H | H | Cl |
| P1. 50 | CH₃C(=O) | H | CH₃ | H | H | H |
| P1. 51 | CH₃C(=O) | H | F | H | H | H |
| P1. 52 | CH₃C(=O) | H | H | Cl | H | OCH₃ |
| P1. 53 | CH₃C(=O) | H | Cl | H | H | NO₂ |
| P1. 54 | CH₃C(=O) | H | CH₃ | H | CH₃ | CH₃ |

Table 2 : A compound of formula (II) 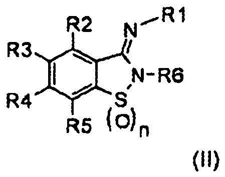 wherein n = 2, R₃ = H, R₄ = H, R₅ = H and the values for R₁, R₂ and R₆ are as given in the Table:

| **Line** | **R₁** | **R₆** | **R₂** |
|---|---|---|---|
| P2. 1 | H | CH₃ | Cl |
| P2. 2 | H | CH₃ | F |
| P2. 3 | H | CH₃ | OCH₃ |
| P2. 4 | H | CH₃CH₂ | F |
| P2. 5 | H | CH₂=CHCH₂ | Cl |
| P2. 6 | H | CH₂=CHCH₂ | F |
| P2. 7 | H | CH₃ | CH₃ |

Table 3 : A compound of formula (I) 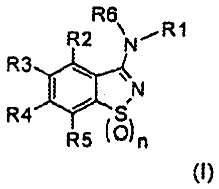 wherein n = 0, R₃ = H, R₄ = H and the values for R₁, R₂, R₅ and R₆ are as given in the Table:

| **Line** | **R₁** | **R₆** | **R₂** | **R₅** |
|---|---|---|---|---|
| P3. 1 | H | H | H | H |
| P3. 3 | CH₃C(=O) | H | Cl | NO₂ |
| P3. 7 | CF₃C(=O) | H | Cl | H |
| P3. 8 | CF₃CF₂C(=O) | H | Cl | H |
| P3. 9 | CF₃CF₂CF₂C(=O) | H | Cl | H |
| P3. 10 | CF₃-O-CF₂CF₂C(=O) | H | Cl | H |
| P3. 11 | CF₃C(=O) | H | CH₃ | H |
| P3. 12 | CH₃C(=O) | H | OCH₃ | H |
| P3, 13 | PhC(=O) | H | Cl | H |

In a preferred embodiment, compound of formula I is when R1 is H; R6 is H or (C₁-C₃)alkyl-C(O); R2 is halogen; R3 to R5 is H; and n is 2.

Synthesis of compounds I and II are known in the art, see for example, EP 33984, EP191734, DE3544436, EP138762, EP133418, EP110829, EP207891, JP02006496 and JP01319467. In particular synthesis of compounds P1.1, P1.5 and P1.8 are decribed in EP33984 and EP191734.

In an embodiment of each aspect, a pesticidal combination comprising the compound defined in the first aspect and one or more pesticides are applied on the plant propagation material, in any desired sequence or simultaneously.

In the event a pesticidal combination is used, the compound I or II and one or more pesticides are present in the form of a plant propagation material, preferably seed, treatment composition, wherein the composition optionally further comprises one or more customary formulation auxiliaries.

Examples of pesticides include fungicides, bactericides, insecticides, acaricides and nematicides. A preferred pesticide for use in pesticidal combination with the compound I or II is an insecticide, fungicide, acaricides, and/or nematicide.

Suitable examples of insecticide, acaricide and/or nematcide are thiamethoxam, imidacloprid, clothianidin, lamda-cyhalothrin, tefluthrin, β-cyfluthrin, permethrin, chloranthraniliprole, abamectin, fipronil, and spinosad.

Suitable examples of fungicides are fludioxonil, penthiopyrad, prothioconazole, flutriafol, difenoconazole, azoxystrobin, captan, cyproconazole, cyprodinil, boscalid, diniconazole, epoxiconazole, fluoxastrobin, trifloxystrobin, metalaxyl, metalaxyl-M (mefenoxam), fluquinconazole, fenarimol, nuarimol, pyrifenox, pyraclostrobin, thiabendazole, tebuconazole, triadimenol, benalaxyl, benalaxyl-M, benomyl, carbendazim, carboxin, flutolanil, fuberizadole, guazatine, myclobutanil, tetraconazole, imazalil, metconazole, bitertanol, cymoxanil, ipconazole, iprodione, prochloraz, pencycuron, propamocarb, silthiofam, thiram, triazoxide, triticonazole, tolylfluanid, a manganese compound (such as mancozeb, maneb), a compound of formula A 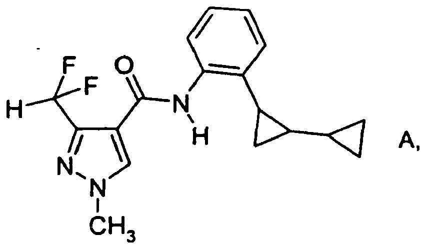 or a tautomer of such a compound, and a compound of formula B 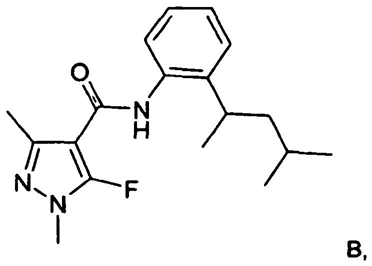 or a tautomer of such a compound.

In an aspect of the invention, the present invention also provides a pesticidal combination comprising a compound I or II, as defined the first aspect, and one or more defined pesticides. The pesticidal combination is suitable for controlling or preventing pathogenic damage or pest damage in a plant propagation material, a plant, and/or plant organs that grow at a later point in time, which comprises applying on the plant propagation material thereof or locus thereof, the pesticidal combination, in any desired sequence or simultaneously.

In the instance a fungicide is also used in the present invention the biological spectrum of the pesticidal combination is broadened to such an extent that the combination demonstrates activity against damage caused by a pathogens.

The compound of formula A can occur in different stereoisomeric forms, which are described in formulae A_{I}, A_{II}, A_{III} and A_{IV}:

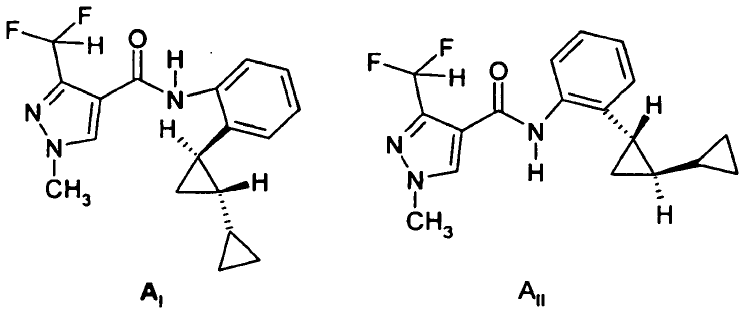

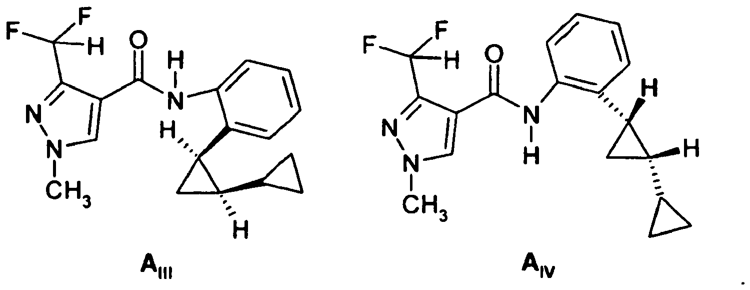

The invention covers all such stereoisomers and mixtures thereof in any ratio with a pesticidal combination of compound A.

In an embodiment, compound A is a compound of the formula Aa (trans) 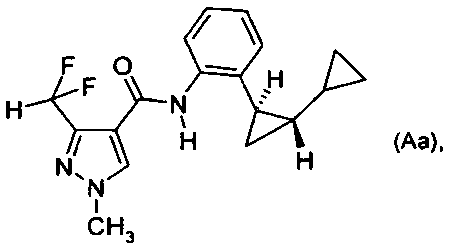 which represents a compound of formula A_{I}, a compound of formula A_{II} or a mixture in any ratio of a compound of formula A_{I} and a compound of formula A_{II}.

In an embodiment, compound A is a compound of the formula Ab (cis) 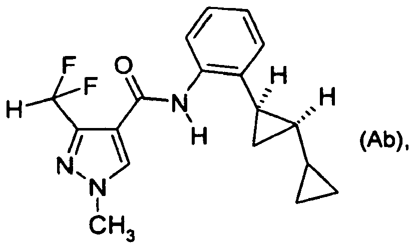 which represents a compound of formula Al_{III}, a compound of formula A_{IV} or a mixture in any ratio of a compound of formula A_{III} and a compound of formula A_{IV}.

In a preferred embodiment compound A is a racemic mixture of compound formula A, wherein the weight ratio of racemic compounds of formula Aa, which represent a racemic mixture of compounds of formula A_{I} and compounds of formula A_{II}, to racemic compounds of formula Ab, which represent a racemic mixture of compounds of formula A_{III} and compounds of formula A_{IV}, is from 1 : 1 to 100. Suitable examples of weight ratios of compound of formula Aa to Ab in a racemic mixture are 1:1, 2:1, 3:1, 4:1, 5:1, 6:1, 7:1, 8:1, 9:1, 10:1, 20:1, 50:1 or 100: 1. Preference is given to ratios from 2:1 to 100:1, more preferably 4:1 to 10:1.

In an especially preferred embodiment compound A is a racemic mixture, wherein the content of racemic compound of formula Aa, which represent a racemic mixture of compounds of formula A_{I} and compounds of formula A_{II}, is from 65 to 99 % by weight.

Details (e.g., structure, chemical name, commercial names, etc) of each of the pesticides with a common name can be found in the e-Pesticide Manual, version 3.1, 13th Edition, Ed. CDC Tomlin, British Crop Protection Council, 2004-05.

The compound of formula A (including the different stereoisomeric forms) and its manufacturing processes starting from known and available compounds are described in WO 03/074491.

Details of compound of formula B are disclosed in WO 03/010149 and WO 05/58839.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
a plant, part of the plant or plant propagation material to such a level that an improvement is demonstrated.

The compound defined in the first aspect and pesticidal combinations thereof can have very advantageous properties for protecting plant propagation material, parts of plant and/or plant that grows at a later point in time against (i) pest attack or damage, which can result in reduced yield, germination, or susceptility to attack or damage by other pests and/or pathogens, and/or (ii) pathogenic, such as phytopathogenic, especially fungi, attack or infestation, which can result in a disease and damage to the plant in the instance the pesticidal combination comprises a pesticide that is a fungicide; the present invention can, therefore, control or prevent pest damage and/or pathogenic damage on a plant propagation material, parts of plant and/or plant that grows at a later point in time.

These properties can be for example the unexpected enhanced action resulting in lower pathogenic damage and/or pest damage, lower rates of application, or a longer duration of action. In the instance of agriculture, the enhanced action is found to show an improvement in the growing characteristics of a plant by, for example, higher than expected control of the pathogenic infestation and/or pest damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying to a plant propagation material the compound of the first aspect or a pesticidal combination thereof. In the event a pesticidal combination is used, the application of the compound I or II and one or more pesticides can be in in any desired sequence or simultaneously.

When the compound I or II is used in combination with one or more pesticides, a synergistically enhanced activity may be observed.

Suitable examples of fungicides, insecticides and nematicides include triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, avermectins, carbamates and pyrethroids.

Accordingly, the invention makes available a combination comprising a compound I and one or more of a pesticide selected from fludioxonil, penthiopyrad, prothioconazole, flutriafol, difenoconazole, azoxystrobin, captan, cyproconazole, cyprodinil, boscalid, diniconazole, epoxiconazole, fluoxastrobin, trifloxystrobin, metalaxyl, metalaxyl-M (mefenoxam), fluquinconazole, fenarimol, nuarimol, pyrifenox, pyraclostrobin, thiabendazole, tebuconazole, triadimenol, benalaxyl, benalaxyl-M, benomyl, carbendazim, carboxin, flutolanil, fuberizadole, guazatine, myclobutanil, tetraconazole, imazalil, metconazole, bitertanol, cymoxanil, ipconazole, iprodione, prochloraz, pencycuron, propamocarb, silthiofam, thiram, triazoxide, triticonazole, tolylfluanid, a manganese compound (such as mancozeb, maneb), a compound of formula A, compound of formula B, thiamethoxam, imidacloprid, clothianidin, lamda-cyhalothrin, tefluthrin, β-cyfluthrin, permethrin, chloranthraniliprole, abamectin, fipronil, and spinosad.

Also made available is a available a pesticidal combination comprising a compound II and one or more of a pesticide selected from fludioxonil, penthiopyrad, prothioconazole, flutriafol, difenoconazole, azoxystrobin, captan, cyproconazole, cyprodinil, boscalid, diniconazole, epoxiconazole, fluoxastrobin, trifloxystrobin, metalaxyl, metalaxyl-M (mefenoxam), fluquinconazole, fenarimol, nuarimol, pyrifenox, pyraclostrobin, thiabendazole, tebuconazole, triadimenol, benalaxyl, benalaxyl-M, benomyl, carbendazim, carboxin, flutolanil, fuberizadole, guazatine, myclobutanil, tetraconazole, imazalil, metconazole, bitertanol, cymoxanil, ipconazole, iprodione, prochloraz, pencycuron, propamocarb, silthiofam, thiram, triazoxide, triticonazole, tolylfluanid, a manganese compound (such as mancozeb, maneb), a compound of formula A, compound of formula B, thiamethoxam, imidacloprid, clothianidin, lamda-cyhalothrin, tefluthrin, β-cyfluthrin, permethrin, chloranthraniliprole, abamectin, fipronil, and spinosad.

In an embodiment, a pesticidal combination comprising a compound I and/or II and a compound of formula A; compound I and/or II and a compound of formula B; a compound I and/or II and penthiopyrad; a compound I and/or II and triticonazole; a compound I and/or II and prothioconaziole; a compound I and/or II and fluoxastrobin; a compound i and/or II and fluquinconazole; a compound I and/or II and flutriafol, a compound I and/or II and guazatine; a compound I and/or II and difenoconazole; a compound I and/or II and fludioxonil; a compound I and/or II and prochloraz; a compound I and/or II and ipconazole; a compound I and/or II and thiamethoxam, a compound I and/or II and imdiacloprid, a compound I and/or II and chlothianidin; a compound I and/or II and fipronil, a compound I and/or II and abamectin, a compound I and/or II and tefluthrin, a compound I and/or II and lambda cyhalothrin, a compound I and/or II and beta-cyfluthrin, a compound I and/or II and cyproconazole; a compound I and/or II and azoxystrobin; a compound I and/or II and metalaxyl; a compound I and/or II and mefenoxam; a compound I and/or II and thiram; a compound I and/or II and captan; a compound I and/or II and spinosad; a compound I and/or II and permethrin; or a compound i and/or II and tebuconazole; is preferred according to the invention.

In an embodiment, a pesticidal combination can comprise a compound I, a compound of formula A, and a compound selected from fludioxonil, metalaxyl, mefenoxam, cyprodinil, azoxystrobin, tebuconazole, difenoconazole and thiabendazole.

In a further embodiment, a pesticidal combination comprising a compound I, an insecticide selected from thiamethoxam, imidacloprid, clothianidin, fipronil, chloranthraniliprole, abamectin, tefluthrin, and beta-cyfluthrin, and boscalid or epoxyconazole or tolylfluanid; a compound I, an insecticide selected from thiamethoxam, imidacloprid, clothianidin, fipronil, chloranthraniliprole, abamectin, tefluthrin and beta-cyfluthrin, and azoxystrobin; a compound I, an insecticide selected from thiamethoxam, imidacloprid, clothianidin, fipronil, chloranthraniliprole, abamectin, tefluthrin and beta-cyfluthrin, and fludioxonil, a compound I, an insecticide selected from thiamethoxam, imidacloprid, clothianidin, fipronil, chloranthraniliprole, abamectin, tefluthrin and beta-cyfluthrin, and mefenoxam, a compound I, an insecticide selected from thiamethoxam, imidacloprid, clothianidin, fipronil, chloranthraniliprole, abamectin, tefluthrin and beta-cyfluthrin, and compound of formula A; a compound I, an insecticide selected from thiamethoxam, imidacloprid, clothianidin, fipronil, chloranthraniliprole, abamectin, tefluthrin and beta-cyfluthrin, and prochloraz; a compound I, an insecticide selected from thiamethoxam, imidacloprid, clothianidin, fipronil, chloranthraniliprole, abamectin, tefluthrin and beta-cyfluthrin, and prothioconazole; a compound I, an insecticide selected from thiamethoxam, imidacloprid, clothianidin, fipronil, chloranthraniliprole, abamectin, tefluthrin and beta-cyfluthrin, and fluoxastrobin; a compound I, an insecticide selected from thiamethoxam, imidacloprid, clothianidin, fipronil, chloranthraniliprole, abamectin, tefluthrin and beta-cyfluthrin, and penthiopyrad; a compound I, an insecticide selected from thiamethoxam, imidacloprid, clothianidin, fipronil, chloranthraniliprole, abamectin, tefluthrin and beta-cyfluthrin, and ipconazole, is advantageous.

In an embodiment, a pesticidal combination can comprise a compound II, a compound of formula A, and a compound selected from fludioxonil, metalaxyl, mefenoxam, cyprodinil, azoxystrobin, tebuconazole, difenoconazole and thiabendazole.

In a further embodiment, a pesticidal combination comprising a compound II, an insecticide selected from thiamethoxam, imidacloprid, clothianidin, fipronil, chloranthraniliprole, abamectin, tefluthrin, and beta-cyfluthrin, and boscalid or epoxyconazole or tolylfluanid; a compound II, an insecticide selected from thiamethoxam, imidacloprid, clothianidin, fipronil, chloranthraniliprole, abamectin, tefluthrin and beta-cyfluthrin, and azoxystrobin; a compound II, an insecticide selected from thiamethoxam, imidacloprid, clothianidin, fipronil, chloranthraniliprole, abamectin, tefluthrin and beta-cyfluthrin, and fludioxonil_{.} a compound II, an insecticide selected from thiamethoxam, imidacloprid, clothianidin, fipronil, chloranthraniliprole, abamectin, tefluthrin and beta-cyfluthrin, and mefenoxam, a compound II, an insecticide selected from thiamethoxam, imidacloprid, clothianidin, fipronil, chloranthraniliprole, abamectin, tefluthrin and beta-cyfluthrin, and compound of formula A; a compound II, an insecticide selected from thiamethoxam, imidacloprid, clothianidin, fipronil, chloranthraniliprole, abamectin, tefluthrin and beta-cyfluthrin, and prochloraz; a compound II, an insecticide selected from thiamethoxam, imidacloprid, clothianidin, fipronil, chloranthraniliprole, abamectin, tefluthrin and beta-cyfluthrin, and prothioconazole; a compound II, an insecticide selected from thiamethoxam, imidacloprid, clothianidin, fipronil, chloranthraniliprole, abamectin, tefluthrin and beta-cyfluthrin, and fluoxastrobin; a compound II, an insecticide selected from thiamethoxam, imidacloprid, clothianidin, fipronil, chloranthraniliprole, abamectin, tefluthrin and beta-cyfluthrin, and penthiopyrad; a compound II, an insecticide selected from thiamethoxam, imidacloprid, clothianidin, fipronil, chloranthraniliprole, abamectin, tefluthrin and beta-cyfluthrin, and ipconazole, is advantageous.

The compound I or II and pesticidal combinations thereof are suitable for control of pests, such as animal pests, such as those anthropodal pests, e.g arachnids, myriapedes and insects as well as nematodes, i.e those present in soil and above ground and found in agriculture. Examples of pests include:
from the order Lepidoptera, for example, Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia spp., Cryptophlebia leucotreta, Crysodeixis includens, Cydia spp., Diatraea spp., Diparopsis castanea, Earias spp., Elasmopalpus spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicelia, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order Coleoptera, for example, Agriotes spp., Anthonomus spp., Atomaria linearis, Ceutorhynchus spp., Chaetocnema tibialis, Cosmopolites spp., Curculio spp., Dermestes spp., Diabrotica spp., Epilachna spp., Eremnus spp., Gonocephalum spp., Heteronychus spp., Leptinotarsa decemlineata, Lissorhoptrus spp., Melolontha spp., Orycaephilus spp., Otiorhynchus spp., Phlyctinus spp., Phyllotreta spp., Popillia spp., Protostrophus spp., Psylliodes spp., Rhizopertha spp., Scarabeidae, Sitophilus spp., Sitotroga spp., Tenebrio spp., Tribolium spp. and Trogoderma spp.;
from the order Orthoptera, for example, Blatta spp., Blattella spp., Gryllotalpa spp., Leucophaea maderae, Locusta spp., Periplaneta spp. and Schistocerca spp.;
from the order Isoptera, for example, Reticulitermes spp.;
from the order Psocoptera, for example, Liposcelis spp.;
from the order Anoplura, for example, Haematopinus spp., Linognathus spp., Pediculus spp., Pemphigus spp. and Phylloxera spp.;
from the order Mallophaga, for example, Damalinea spp. and Trichodectes spp.;
from the order Thysanoptera, for example, Frankliniella spp., Hercinothrips spp., Taeniothrips spp., Thrips palmi, Thrips tabaci and Scirtothrips aurantii;
from the order Heteroptera, for example, Dichelops melacanthus, Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order Homoptera, for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order Hymenoptera, for example, Acromyrmex, Athalia rosae, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
from the order Diptera, for example, Antherigona soccata, Bibio hortulanus, , Ceratitis spp., Chrysomyia spp., Culex spp., Cuterebra spp., Dacus spp., Delia spp., Drosophila melanogaster, , Liriomyza spp., , Melanagromyza spp., , Orseolia spp., Oscinella frit, Pegomyia hyoscyami, Phorbia spp., Rhagoletis pomonella, Sciara spp.,;
from the order Acarina, for example, Acarus siro, Aceria sheldoni, Aculus schlechtendali, Amblyomma spp., Argas spp., , Brevipalpus spp., Bryobia praetiosa, Calipitrimerus spp., Chorioptes spp., Dermanyssus gallinae, Eotetranychus carpini, Eriophyes spp., Hyalomma spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.; and
from the class Nematoda, for example, the species of Meloidogyne spp. (for example, Meloidogyne incoginita and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonlaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp.

Compounds I and II can be particularly suitable for controlling insects, preferably sucking or piercing insects such as insects from the genera Thysanoptera, Hymenoptera, Orthoptera and Homptera, in particular the following species:
Thysanoptera (thrips): Frankliniella fusca, Frankliniella occidentalis, Frankliniella tritici, Scirtothrips citri, Thrips oryzae, Thrips palmi and Thrips tabaci,
Hymenoptera: Athalia rosae, Atta cephalotes, Atta sexdens, Atta texana, Hoplocampa minuta, Hoplocampa testudinea, Monomorium pharaonis, Solenopsis geminata and Solenopsis invicta,
Orthoptera: Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus and Tachycines asynamorus;
Homoptera, in particular aphids: Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, and Viteus vitifolii; Compounds I and II particularly useful for controlling insects of the orders Homoptera and Thysanoptera and more preferably for controlling aphids, in particular Aphis craccivora and Myzus persicae. Compound P1.1, P1.5 and P1.58 ar especially effective seed treatment compounds for controlling aphids.

In the event a pesticidal combination of the invention also includes a pesticide such as a fungicide, the combination is effective against phytopathogenic fungi, especially occurring in plants, including seed borne fungi and belong to the following classes: Ascomycetes (e.g. Penicillium, Gaeumannomyces graminis); Basidiomycetes (e.g. the genus Hemileia, Rhizoctonia, Puccinia); Fungi imperfecti (e. g. Botrytis, Helminthosporium, Rhynchosporium, Fusarium, Septoria, Cercospora, Alternaria, Pyricularia and Pseudocercosporella herpotrichoides); Oomycetes (e. g. Phytophthora, Peronospora, Bremia, Pythium, Plasmopara); Zygomycetes (e.g., Rhizopus spp.). The compound I and/or II and pesticidal combinations thereof are especially effective against Alternaria spp., Ascochyta spp., Aspergillus spp., Claviceps purpurea, Cochliobolus spp., Colletotrichum spp., Diplodia maydis, Erysiphe graminis, Fusarium spp. (such as Fusarium culmorum, Fusarium oxysporum, Fusarium solani, Fusarium graminearum and Fusarium moniliforme, Fusarium subglutinans), Gaeumannomyces graminis, Giberella fujikuroi, Giberella zeae, Helminthosporium spp. (such as Helminthosporium graminearum, Helminthosporium oryzae, Helminthosporium solani), Monographella nivalis, Penicillium spp., Puccinia spp., Pyrenophora spp. (such as Pyrenophora graminea), Peronosclerospora spp., Peronspora spp., Phakopsora pachyrhizi, Phythium spp., Phoma spp., Phomopsis spp., Rhizoctonia spp. (such as Rhizoctonia cerealis, Rhizoctonia solani), Septoria spp., Pseudocercosporella spp., Tilletia spp., Rhizopus spp., Thielaviopsis basicola, Typhula spp., Ustilago spp., Sphacelotheca spp. (e.g. Spacelotheca reilliani), Thanatephorus cucumeris, and Verticillium spp..

The compound I and/or II and pesticidal combinations thereof can be formulated for a particular use. Preferably, the compound I and/or II and pesticidal combination thereof can be formulated for protecting plant propagation materials. Advantageously, the pesticidal combinations are formulated for plant propagation material, preferably seed, treatment applications for controlling or preventing damage by pests and/or pathogens, which are found in agriculture and forestry, and can particularly damage the plant in the early stages of its development.

Further, the present invention also envisages soil application of the compound I and/or II or pesticidal combinations thereof, for example, to control the soil-dwelling pests and/or soil-borne pathogens. Methods of applying to the soil can be via any suitable method, which ensures that the pesticidal combination penetrates the soil, for example, nursery tray application, in furrow application, soil drenching, soil injection, drip irrigation, application through sprinklers or central pivot, incorporation into soil (broad cast or in band) are such methods.

The benefit from the invention can also be achieved either by (i) treating plant propagation material with a compound I and/or II or a combinaton thereof or (ii) applying to the locus where control is desired, generally the planting site, the compound I and/or II or a combinaton thereof, or both (i) and (ii).

The term "plant propagation material" is understood to denote all the generative parts of the plant, such as seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pathogenic and/or pest damage protection achieved by the application of the compound defined in the first aspect or a pesticidal combination thereof on to the plant propagation material. In an embodiment, certain parts of plant and certain plant organs that grow at later point in time can also be considered as plant propagation material, which can themselves be applied (or treated) with the compound defined in the first aspect or a pesticidal combination thereof; and consequently, the plant, further parts of the plant and further plant organs that develop from the treated parts of plant and treated plant organs can also benefit from the pathogenic and/or pest damage protection achieved by the application of the compound defined in the first aspect or a pesticidal combination thereof on to the certain parts of plant and certain plant organs.

Methods for applying or treating pesticidal active ingredients and mixtures thereof on to plant propagation material, especially seeds, are known in the art, and include dressing, coating, pelleting and soaking application methods of the propagation material.

The active ingredients can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the compound defined in first aspect or a pesticidal combination thereof is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications).

The seed may also be primed either before or after the treatment.

Even distribution of the active ingredients and adherence thereof to the seeds is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the compound defined in the first aspect or a pesticidal combination thereof. In particular, seed coating or seed pelleting are preferred in the treatment of the compound defined in the first aspect and pesticidal combinations thereof. As a result of the treatment, the active ingredients are adhered on to the seed and therefore available for pest and/or disease control.

The treated seeds can be stored, handled, sowed and tilled in the same manner as any other active ingredient treated seed.

The compound I and/ or II and a pesticidal combination thereof according to the present invention is suitable for plants of the crops, such as cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). Especially suitable are wheat, barley, rye, oats, corn and soybean, triticale. Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

In the instance of a pesticidal combination, the weight ratio of a compound I and/or II with a pesticide is selected as to give the desired, for example, synergistic, action. In general, the weight ratio would vary depending on the specific pesticide and how many pesticides are present in the combination. Generally, the weight ratio between any two active ingredients is from 100:1 to 1:100, preferably from 75:1 to 1:75, more preferably, 50:1 to 1.50, especially 25:1 to 1:25, advantageously 10:1 to 1:10.

The rates of application (use) of the compound I and/or II alone or in combination with one or more pesticides vary, for example, according to type of use, type of crop, the specific active ingredients in the combination, type of plant propagation material but is such that the active ingredients in the combination is an effective amount to provide the desired enhanced action (such as disease or pest control) and can be determined by trials.

Generally for plant propagation material, such as seed , treatment, application rates can vary from 0.5 to 1000g / 100kg of seeds of active ingredients.

A compound I or II can be applied to a plant propagation material in an amout of 0.01 to 1 preferably 0.02 to 0.6, such as 0.05 to 0.15, mg/seed.

Suitable seed treatment application rates of a compound I or II can be 1 - 200, preferably 2 - 150 more preferably 10-100, g/100kg, of seeds, and if one or more pesticides are also present, then the total rates tend to 1-1000, preferably 2-550, more preferably 10 - 450, g/100kg.

The plant propagation material treated by a compound I and/or II or pesticidal combination thereof of the present invention are, therefore, resistant to pest damage; accordingly, the present invention also provides a pest resistant plant propagation material which is treated with compound I and/or II or the pesticidal combination thereof and consequently at least the active ingredients thereof are adhered on the propagation material, such a seed.

The seed treatment composition comprising a compound I and/or II or pesticidal combination thereof can also comprise or may be applied together and/or sequentially with further active compounds. These further compounds can be other pesticidal active ingredients, fertilizers or micronutrient donors or other preparations that influence plant growth, such as inoculants and plant inducers.

A single pesticidal active ingredient may have activity in more than area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The pesticidal combination of the present invention may be mixed with other pesticides, such as fungicides, insecticides and nematicides as described above.

The compound of formula I and/or II and the pesticide(s) may be used either in pure form, i.e., as a solid active ingredient, for example, in a specific particle size, or preferably together with at least one of the auxiliary (also known as adjuvants) customary in formulation technology, such as extenders, *e.g*., solvents or solid carriers, or surface-active compounds (surfactants), in the form of a formulation, in the present invention. Generally, the compound and pesticide(s) are in the form of a formulation composition with one or more of customary formulation auxiliaries.

Therefore, a compound I and/or II or pesticidal combination thereof is normally used in the form of formulations. The compound I and/or II and the pesticide(s) making-up the pesticidal combination can be applied to the locus where control is desired either simultaneously or in succession at short interval, for example on the same day, if desired together with further carriers, surfactants or other application-promoting adjuvants customarily employed in formulation technology. In a preferred embodiment, the pesticidal combination is applied simultaneously.

In the event pesticidal combination is applied simultaneously in the present invention, they may be applied as a composition, in which case the compound of formula I and/or II and the pesticide(s) can be obtained from a separate formulation source and mixed together (known as a tank-mix, ready-to-apply, spray broth, or slurry), optionally with other pesticides, or they can be obtained as single formulation mixture source (known as a pre-mix, concentrate, formulated compound (or product)), and optionally mixed together with other pesticides.

In an embodiment, the pesticidal combination of the present invention is applied as a composition.

In a preferred embodiment of the invention, the composition is a pre-mix composition (or mixture).

Examples of foliar formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are: WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Generally, a tank-mix formulation for soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for soil application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

The Examples which follow serve to illustrate formulations according to the invention, "active ingredient" denoting a compound I and/or II or a combination thereof with another pesticide(s).

### Formulation Examples

| Wettable powders | a) | b) | c) |
|---|---|---|---|
| active ingredient | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether | - | 2 % | - |
| (7-8 mol of ethylene oxide) | | | |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredient | 10 % |
| octylphenol polyethylene glycol ether | 3 % |
| (4-5 mol of ethylene oxide) | |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient | 5 % | 6 % | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

### Extruder granules

| | |
|---|---|
| Active ingredient | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

| Coated granules | |
|---|---|
| Active ingredient | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

| Suspension concentrate | |
|---|---|
| active ingredient | 40 % |
| propylene glycol | 10 % |
| nonylphenol polyethylene glycol ether (15 mol of ethylene oxide) | 6 % |
| Sodium lignosulfonate | 10 % |
| Carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

| Flowable concentrate for seed treatment | |
|---|---|
| active ingredient | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in | 0.5 % |

| water) | |
|---|---|
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

In a preferred embodiment, each of the pesticidal combination of the present invention is a plant propagation material, preferably seed, treating composition.

Using such formulations either straight or diluted plant propagation material can be treated and protected against damage, for example, from pathogen(s), by, for example, spraying, pouring or immersing.

The compound I and/or II and pesticidal combinations thereof are distinguished by the fact that they are especially well tolerated by plants and are environmentally friendly.

The present invention relates to an enantiomer, diastereomer, or salt, thereof of each compound described herein.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

The following Examples are given by way of illustration and not by way of limitation of the invention.

### Examples

### 1. Preparation of 3-Amino-4-chlorobenzo[d]isothiazole-1,1-dioxide (compound P1.5):

12.5 ml of a 25% ammonia is added at approx 60°C to a solution of 11.8 g of 2-cyano-3-chlorobenzenesulfonylchloride in 20 ml of dioxane. After heating on a steam bath for 30 minutes the reaction mixture is cooled and diluted with water. The resulting crystalline product is sucked off, washed with water and dried. After recrystallisation from ethanol, the product meltsat 261-263°C.

3-Amino-4-methoxybenzo[d]isothiazole-1,1-dioxide (m.p. 270°C) is prepared in corresponding manner (compound P1.1).

### 2. Preparation of 3-Acetylamino-4-methoxvbenzo[d]isothiazole-1,1-dioxide (compound P1.8):

6.66 g 3-acetylamino-4-methoxybenzo[d]isothiazole is suspended in 150 ml chloroform. 10.35 g m-chloroperbenzoic acid is added to the mixture at 20-30°C in portions. The reaction mixture is stirred overnight, solids are filtered off and the filtrate is concentrated. The crude product is purified by column chromatography (SiO₂, methylenchloride-isopropanol). 3-Acetylamino-4-methoxybenzo[d]isothiazole-1,1-dioxide is obtained as colorless cristals with a m.p. of 242-245°C.

### Comparative Example 1

Compounds α, β and χ disclosed in WO07/057407 (specifically identified in Table C, Nos. 7, 15 and. 23 respectively) are compared for biological efficacy against compounds P1.1, P1.5, P1.6 and P1.32 of the present invention.

### B1: Myzus persicae (green peach aphid) (mixed population, sachet test)

Each well of a 24-well microtiter plate is filled with 0.6ml 30% sucrose solution, containing 12.5 ppm of the test compounds. For producing the sachets, the wells are covered with streched parafilm and infested with a mixed population of *Myzus persicae.* 6 days after the infestation, samples are checked for mortality (feeding activity).

Compounds β and χ did not show activity, whereas compound α gives 80% control of *Myzus persicae.* In contrast, compounds P1.1, P1.5 and P1.6 give 100% control of of *Myzus persicae.*

### B2: Myzus persicae (green peach aphid) (mixed population, systemic/feeding activity, curative)

Roots of pea seedlings, infested with an aphid population of mixed ages, are placed directly in the test solutions of 6 ppm. 6 days after introduction, samples are checked for mortality and special effects on the plant.

Compound α gives 50% control of *Myzus persicae.* In contrast, compound P1.32 gives 80% control, and compounds P1.1, P1.5 and P1.6 give 100% control, of *Myzus persicae.*

### Example 1

Sugarbeet seeds are treated with P1.1, P1.5, P1.6, P1.8, P1.32 or P1.38 at rates of 0.1, 0.3 and 0.6 mg a.i. /seed. The seeds are sown into 9-cm pots filled with 280 mL of soil. After placing the seeds on the soil surface they are covered with 50 mL of soil. Before and during the bioassays, the plants are grown in greenhouse chambers at 25 °C during daytime, 23 °C during night, 50-60 % rH, a 14-hour photoperiod and artificial lighting when natural light fell below 20 kLux. After sowing, the pots are transferred to the greenhouse chambers, set up in a random fashion and are irrigated as necessary from above. After 14 days, the plants are infested with African bean aphid (Aphis craccivora) by placing one infested pea seedling containing approximately 150 aphids of a population of mixed developmental stages onto each plant. Seven days after infestation, the number of aphids is counted per plant. Each treatment group is replicated 10 times. Each replicate contains 1 plant. The table below shows the reduction of aphids compared to the untreated control plants.

**Table: Reduction of African bean aphid exposed to sugarbeet plants grown from seeds treated with compounds P1.1, P1.5, P1.6, P1.8, P1.32 or P1.38**

| mg/seed | Efficacy, % | Efficacy, % | Efficacy, % | Efficacy, % | Efficacy, % | Efficacy, % |
|---|---|---|---|---|---|---|
| | P1.1 | P1.5 | P1.6 | P1.8 | P1.32 | P1.38 |
| 0.1 | 41 | 87 | 83 | 8 | 93 | 67 |
| 0.3 | 69 | | | 72 | 99 | 96 |
| 0.6 | 92 | | | 95 | 98 | 98 |

### Example 2

Chinese cabbage seeds are treated with P1.1, P1.5, P1.6, P1.8, P1.32 or P1.38 at rates of 0.3 and 0.6 mg a.i. /seed. The seeds are sown into 9-cm pots filled with 280 mL of soil. After placing the seeds on the soil surface they are covered with 50 mL of soil. Before and during the bioassays, the plants are grown in greenhouse chambers at 25 °C during daytime, 23 °C during night, 50-60 % rH, a 14-hour photoperiod and artificial lighting when natural light fell below 20 kLux. After sowing, the pots are transferred to the greenhouse chambers, set up in a random fashion and are irrigated as necessary from above. After 14 days, the plants are infested with cabbage aphid (Myzus persicae) by placing one infested pea seedling containing approximately 150 aphids of a population of mixed developmental stages onto each plant. Seven days after infestation, the number of aphids is counted per plant. Each treatment group is replicated 10 times. Each replicate contains 1 plant. The table below shows the reduction of aphids compared to the untreated control plants.

**Table: Reduction of cabbage aphid exposed to Chinese cabbage plants grown from seeds treated with compounds P1.1, P1.5, P1.6, P1.8, P1.32 or P1.38**

| mg/seed | Efficacy, % | Efficacy, % | Efficacy, % | Efficacy, % | Efficacy, % | Efficacy, % |
|---|---|---|---|---|---|---|
| | P1.1 | P1.5 | P1.6 | P1.8 | P1.32 | P1.38 |
| 0.3 | 10 | 11 | 17 | 0 | 5 | 0 |
| 0.6 | 45 | 64 | 69 | 28 | 52 | 20 |

## Claims

1. A method of controlling or preventing pest damage in a plant propagation material, a plant, and/or plant organs that grow at a later point in time, which comprises applying on the plant propagation material or locus thereof a compound I or II represented by formula 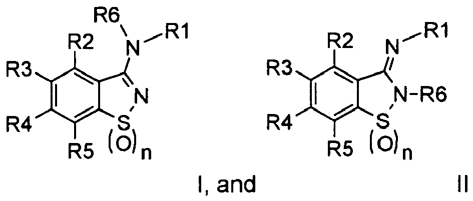 wherein
R1 is H and R6 is represented by (C₁-C₄)alkyl or (C₂-C₄)alkenyl, or R1 is H, (C₁-C₅)alkyl, (C₁-C₄)haloalkyl, (C₁-C₄)hydroxyalkyl, (C₁-C₄)alkoxy, R7C(O), R8NHC(O) or R9R10N and R6 is represented by H
R2 is represented by H, halogen, (C₁-C₅)alkyl, (C₁-C₅)haloalkyl, (C₁-C₅)alkoxy, (C₁-C₅)haloalkoxy, or phenoxy;
R3 to R5 is, independently of each other, represented by H, halogen, (C₁-C₅)alkyl, (C₁-C₅)alkoxy, (C₁-C₅)haloalkyl, or NO₂;
R7 is represented by optionally substituted alkyl (preferably (C₁-C₅)alkyl and (C₁-C₅)haloalkyl), (C₁-C₄)haloalkoxy(C₁-C₄)haloakyl or optionally substituted phenyl;
R8 is represented by optionally substituted phenyl, (C₁-C₄)alkyl, or (C₃-C₇)cycloalkyl;
R9 and R10 is, independently of each other, represented by H or (C₁-C₄)alkyl; and
n is either 0 or 2, preferably 2;
or an enantiomer, diastereomer, thereof.

2. The method according to claim 1 wherein in formula I R1 is represented by H or R7CO and R6 is represented by H.

3. The method according to claim 1 wherein in formula II R1 is represented by H and R6 is represented by (C₁-C₄)alkyl.

4. The method according to any one of claims 1 to 3 wherein R2 is represented by hydrogen, halogen, (C₁-C₅)alkyl, (C₁-C₅)alkoxy, or (C₁-C₅)haloalkoxy.

5. The method according to any one of claims 1 to 4 wherein R3 to R5 are each H.

6. The method according to claim 2 wherein R7 is (C₁ to C₃)alkyl.

7. The method according to any one of claims 1 to 6 wherein the compound is applied on the plant propagation material before planting or sowning thereof.

8. The method according to any one of claims 1 to 7 wherein the pest is selected from one or more representatives of the class Insecta, class Arachnida and class Nematoda.

9. A method of protecting a plant propagation material, a plant, and/or plant organs that grow at a later point in time against pest damage by applying to the plant propagation material or locus thereof a compound of formula I or II defined in any one of claims 1 to 6.

10. A method of improving the growing characterictics of a plant, which comprises applying to a plant propagation material or locus thereof a compound of formula I or II defined in any one of claims 1 to 6.

11. The method according to any one of claim 1 to 10 wherein one or more pesticides, selected from fludioxonil, penthiopyrad, prothioconazole, flutriafol, difenoconazole, azoxystrobin, captan, cyproconazole, cyprodinil, boscalid, diniconazole, epoxiconazole, fluoxastrobin, trifloxystrobin, metalaxyl, metalaxyl-M (mefenoxam), fluquinconazole, fenarimol, nuarimol, pyrifenox, pyraclostrobin, thiabendazole, tebuconazole, triadimenol, benalaxyl, benalaxyl-M, benomyl, carbendazim, carboxin, flutolanil, fuberizadole, guazatine, myclobutanil, tetraconazole, imazalil, metconazole, bitertanol, cymoxanil, ipconazole, iprodione, prochloraz, pencycuron, propamocarb, silthiofam, thiram, triazoxide, triticonazole, tolylfluanid, a manganese compound (such as mancozeb, maneb), a compound of formula A, compound of formula B, thiamethoxam, imidacloprid, clothianidin, lamda-cyhalothrin, tefluthrin, β-cyfluthrin, permethrin, chloranthraniliprole, abamectin, fipronil, and spinosad, is/are also applied on the plant propagation material in a combination with the compound I or II defined in any one of claims 1 to 6, in any desired sequence or simultaneously.

12. The method according to claim 11 wherein the combination is in the form of a composition.

13. The method according to either claim 11 or 12, wherein if the pesticide is a fungicide, then the method controls or prevents pathogenic damage and pest damage.

14. The method according to any one of claims 1 to 13, wherein the plant propagation material is a seed.

15. A plant propagation material treatment composition comprising a compound I or II defined in any one of claims 1 to 6 or a pesticidal combination defined in either claim 11 or 12, and optionally one or more customary formulation auxilaries.

16. A plant propagation material treated with the composition defined in claim 15.

## Patentansprüche

1. Eine Methode zur Steuerung oder Vermeidung von Schädlingsschäden in einem Pflanzenanzuchtmaterial, einer Pflanze und/oder Pflanzenorganen, die zu einem späteren Zeitpunkt wachsen, die darin besteht, am Pflanzenanzuchtmaterial oder seinem Genort einen in der folgenden Formel dargestellten Verbund I oder II, anzuwenden, 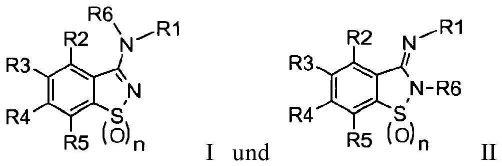 wobei R1 ist H und R6 wird vertreten von (C₁-C₄)Alkyl, oder (C₂-C₄)Alkenyl, oder R1 ist H, (C₁-C₅)Alkyl, (C₁-C₄)Haloalkyl, (C₁-C₄)Hydroxyalkyl, (C₁-C₄)Alkoxy, R7C(O), R8NHC(O) oder R9R10N und R6 wird vertreten von H;
R2 wird vertreten von H, Halogen, (C₁-C₅)Alkyl, (C₁-C₅)Haloalkyl, (C₁-C₅)Alkoxy, (C₁-C₅)Haloalkoxy, oder Phenoxy;
R3 bis R5 wird, unabhängig voneinander, vertreten von H, Halogen, (C₁-C₅)Alkyl, (C₁-C₅)Alkoxy, (C₁-C₅)Haloalkyl, oder NO₂;
R7 wird vertreten vom wahlweise ersetzenden Alkyl (vorzugsweise (C₁-C₅)Alkyl und (C₁-C₅)Haloalkyl), (C₁-C₄)Haloalkoxy(C₁-C₄)Haloakyl oder wahlweise ersetzendem Phenyl;
R8 wird vertreten vom wahlweise ersetzenden Phenyl, (C₁-C₄)Alkyl, oder (C₃-C₇)Cycloalkyl; R9 und R10 wird, unabhängig voneinander, vertreten von H oder (C₁-C₄)Alkyl; und n ist entweder 0 oder 2, vorzugsweise 2;
oder ein Enantiomer, Diastereomer, davon.

2. Die Methode nach Anspruch 1, wobei in Formel I, R1 von H oder R7CO und R6 von H vertreten wird.

3. Die Methode nach Anspruch 1, wobei in Formel II, R1 von H und R6 von (C₁-C₄)Alkyl vertreten wird.

4. Die Methode nach einem der Ansprüche 1 bis 3, wobei R2 von Wasserstoff, Halogen, (C₁-C₅)Alkyl, (C₁-C₅)Alkoxy, oder (C₁-C₅)Haloalkoxy vertreten wird.

5. Die Methode nach einem der Ansprüche 1 bis 4, wobei R3 bis R5 jeweils H sind.

6. Die Methode nach Anspruch 2, wobei R7 (C₁ bis C₃)Alkyl ist.

7. Die Methode nach einem der Ansprüche 1 bis 6, wobei der Verbund auf dem Pflanzenanzuchtmaterial vor seiner Pflanzung oder Aussaat angewandt wird.

8. Die Methode nach einem der Ansprüche 1 bis 7, wobei der Schädling von einem oder mehr Vertretern der Klasse Insecta, Klasse Arachnida und Klasse Nematoda, ausgewählt wird.

9. Eine Methode zum Schutz eines Pflanzenanzuchtmaterials, einer Pflanze und/oder Pflanzenorganen, die zu einem späteren Zeitpunkt wachsen, gegen Schädlingsschäden, durch die Anwendung einer Zusammensetzung in der in einem der Ansprüche 1 bis 6 festgelegten Formel I oder II auf Pflanzenanzuchtmaterial oder seinem Genort,.

10. Eine Methode zur Verbesserung von Wachstumseigenschaften einer Pflanze, welche darin besteht, eine Zusammensetzung in der in einem der Ansprüche 1 bis 6 festgelegten Formel I oder II, auf Pflanzenanzuchtmaterial oder seinem Genort, anzuwenden.

11. Die Methode nach einem der Ansprüche 1 bis 10, wobei eines oder mehrere Pflanzenschutzmittel, ausgewählt von Fludioxonil, Penthiopyrad, Prothioconazole, Flutriafol, Difenoconazole, Azoxystrobin, Captan, Cyproconazole, Cyprodinil, Boscalid, Diniconazole, Epoxiconazol, Fluoxastrobin, Trifloxystrobin, Metalaxyl, Metalaxyl-M (Mefenoxam), Fluquinconazole, Fenarimol, Nuarimol, Pyrifenox, Pyraclostrobin, Thiabendazole, Tebuconazole, Triadimenol, Benalaxyl, Benalaxyl-M, Benomyl, Carbendazim, Carboxin, Flutolanil, Fuberizadole, Guazatine, Myclobutanil, Tetraconazole, Imazalil, Metconazole, Bitertanol, Cymoxanil, Ipconazole, Iprodione, Prochloraz, Pencycuron, Propamocarb, Silthiofam, Thiram, Triazoxid, Triticonazole, Tolylfluanid, eine Manganverbindung (wie z.B. Mancozeb, Maneb), eine Verbindung der Formel A, eine Verbindung der Formel B, Thiamethoxam, Imidacloprid, Clothianidin, Lamda-Cyhalothrin, Tefluthrin, B-Cyfluthrin, Permethrin, Chloranthraniliprole, Abamectin, Fipronil und Spinosad, in Verbindung mit der in einem der Ansprüche 1 bis 6 festgelegten Verbindung I oder II, in jeder beliebigen Folge oder gleichzeitig, auf das Pflanzenanzuchtmaterial, auch angewandt wird/werden.

12. Die Methode nach Anspruch 11, wobei die Verbindung in der Form einer Zusammensetzung ist.

13. Die Methode nach entweder Anspruch 11 oder 12, wobei falls der Pflanzenschutzmittel ein Fungizid ist, die Methode pathogenen Schaden und Schädlingsschaden überwacht oder vermeidet.

14. Die Methode nach einem der Ansprüche 1 bis 13, wobei das Pflanzenanzuchtmaterial ein Samen ist.

15. Eine Pflanzenanzuchtmaterial-Behandlungszusammensetzung bestehend aus Verbund I oder II, wie festgelegt in einem der Ansprüche 1 bis 6, oder eine Pflanzenschutzmittel-Verbindung festgelegt in einem der Ansprüche 11 oder 12, und wahlweise eins oder mehr übliche Hilfsrezepturen.

16. Ein Pflanzenanzuchtmaterial behandelt mit der im Anspruch 15 festgelegten Zusammensetzung.

## Revendications

1. Procédé de contrôle ou de prévention de dommages provoqués par des organismes nuisibles dans un matériau de propagation végétale, un organisme végétal et/ou des organes végétaux qui se développent ultérieurement, comprenant l'application sur le matériau de propagation végétale ou sur un locus de celui-ci d'un composé 1 ou II répondant à la formule 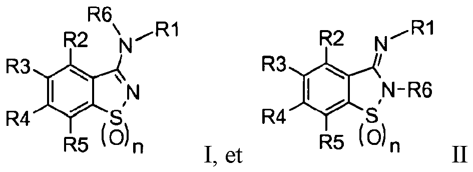 dans lequel
R1 est H et R6 représente (C₁-C₄)alkyle ou (C₂-C₄)alkényle, ou R1 est H, (C₁-C₅)alkyle, (C₁-C₄)haloalkyle, (C₁-C₄)hydroxyalkyle, (C₁-C₄)alcoxyle, R7C(O), R8NHC(O) ou R9R10N, et R6 représente H ;
R2 représente H, un halogène, (C₁-C₅)alkyle, (C₁-C₅)haloalkyle, (C₁-C₅)alcoxyle, (C₁-C₅)haloalcoxyle ou un groupe phénoxyle ;
R3 à R5 représentent, indépendamment les uns des autres, H, un halogène, (C₁-C₅)alkyle, (C₁-C₅)alcoxyle, (C₁-C₅)haloalkyle ou NO₂ ;
R7 représente un groupe alkyle éventuellement substitué (de préférence (C₁-C₅)alkyle et (C₁-C₅)haloalkyle), (C₁-C₄)haloalcoxyle, (C₁-C₄)haloakyle ou un groupe phényle éventuellement substitué ;
R8 représente un groupe phényle éventuellement substitué, (C₁-C₄)alkyle ou (C₃-C₇)cycloalkyle ; R9 et R10 représentent, indépendamment l'un de l'autre, H ou (C₁-C₄)alkyle ; et
n est égal à 0 ou à 2, et de préférence égal à 2 ;
ou un énantiomère ou un diastéréoisomère du composé selon ladite formule.

2. Procédé selon la revendication 1, dans lequel, dans la formule I, R1 représente H ou R7CO et R6 représente H.

3. Procédé selon la revendication 1, dans lequel, dans la formule II, R1 représente H et R6 représente (C₁-C₄)alkyle.

4. Procédé selon l'une quelconque des revendications 1 à 3, dans lequel R2 représente un hydrogène, un halogène, (C₁-C₅)alkyle, (C₁-C₅)alcoxyle ou (C₁-C₅)haloalcoxyle.

5. Procédé selon l'une quelconque des revendications 1 à 4, dans lequel R3 à R5 représentent chacun H.

6. Procédé selon la revendication 2, dans lequel R7 est (C₁ à C₃)alkyle.

7. Procédé selon l'une quelconque des revendications 1 à 6, dans lequel le composé est appliqué au matériau de propagation végétale avant de le planter ou de le semer.

8. Procédé selon l'une quelconque des revendications 1 à 7, dans lequel l'organisme nuisible est sélectionné parmi un ou plusieurs représentants de la classe des insectes, des arachnides et des nématodes.

9. Procédé de protection d'un matériau de propagation végétale, d'un organisme végétal et/ou d'organes végétaux qui se développent ultérieurement contre les dommages provoqués par des organismes nuisibles, en appliquant au matériau de propagation végétale ou à un locus de celui-ci un composé selon la formule I ou II tel que défini par l'une quelconque des revendications 1 à 6.

10. Procédé d'amélioration des caractéristiques de croissance d'une plante, comprenant l'application, à un matériau de propagation végétale ou à un locus de celui-ci, d'un composé selon la formule I ou II tel que défini par l'une quelconque des revendications 1 à 6.

11. Procédé selon l'une quelconque des revendications 1 à 10, dans lequel un ou plusieurs pesticides sélectionnés parmi les suivants : fludioxonil, penthiopyrad, prothioconazole, flutriafol, difenoconazole, azoxystrobine, captane, cyproconazole, cyprodinil, boscalid, diniconazole, époxiconazole, fluoxastrobine, trifloxystrobine, métalaxyl, métalaxyl-M (méfénoxam), fluquinconazole, fénarimol, nuarimol, pyrifénox, pyraclostrobine, thiabendazole, tébuconazole, triadiménol, bénalaxyl, bénalaxyl-M, bénomyl, carbendazime, carboxine, flutolanil, fuberizadole, guazatine, myclobutanil, tétraconazole, imazalil, metconazole, bitertanol, cymoxanil, ipconazole, iprodione, prochloraz, pencycuron, propamocarbe, silthiofam, thirame, triazoxide, triticonazole, tolylfluanide, composé à base de manganèse (tel que le mancozèbe ou le manèbe), composé selon la formule A, composé selon la formule B, thiaméthoxam, imidaclopride, clothianidine, lamda-cyhalothrine, téfluthrine, β-cyfluthrine, perméthrine, chloranthraniliprol, abamectine, fipronil et spinosad, est/sont appliqué(s) sur le matériau de propagation végétale en combinaison avec le composé I ou II défini dans l'une quelconque des revendications 1 à 6, selon une séquence quelconque souhaitée ou simultanément.

12. Procédé selon la revendication 11, dans lequel la combinaison se présente sous forme d'un mélange composé.

13. Procédé selon la revendication 11 ou 12, dans lequel, si le pesticide est un fongicide, le procédé contrôle ou évite des dommages par des pathogènes ou par des organismes nuisibles.

14. Procédé selon l'une quelconque des revendications 1 à 13, dans lequel le matériau de propagation végétale est une semence.

15. Mélange composé de traitement d'un matériau de propagation végétale comprenant un composé I ou II selon l'une quelconque des revendications 1 à 6, ou combinaison de pesticides selon l'une des revendications 11 ou 12, et éventuellement d'un ou plusieurs additifs auxiliaires habituels de formulation.

16. Matériau de propagation végétale traité avec la composition selon la revendication 15.
